# EUROPEAN PATENT SPECIFICATION

(11) **EP 2 566 347 B1**
(45) Date of publication and mention of the grant of the patent: **30.03.2016**
(21) Application number: 11718875.5
(22) Date of filing: 02.05.2011
(51) Int. Cl.: A23L 33/21, A23P 20/10, A23L 29/30, A23L 27/30, A23L 21/25, A21D 13/00

(54) **REDUCED CALORIE AND SUGAR-FREE COATING FOR FOOD PRODUCTS COMPRISING ERYTHRITOL AND A BULKING AGENT COMPRISING MALTODEXTRIN**
KALORIENARME UND ZUCKERFREIE BESCHICHTUNG FÜR LEBENSMITTELPRODUKTE MIT ERYTHRITOL UND EINEM FÜLLSTOFF ENTHALTEND MALTODEXTRIN
ENROBAGE EXEMPT DE SUCRE ET HYPOCALORIQUE POUR PRODUITS ALIMENTAIRES COMPRENANT DE L'ÉRYTHRITOL ET UN AGENT GONFLANT COMPRENANT DES MALTODEXTRINES

(30) Priority: 03.05.2010 US 330746 P
(43) Date of publication of application: 13.03.2013
(73) Proprietor: Cargill, Incorporated, Wayzata, MN 55391 (US)
(72) Inventor: ALEXANDRE, Ben, B-1980 Eppegem (BE); VAN HAVERE, Martine M. R., B-3060 Bertem (BE); VERCAUTEREN, Ronny Leontina Marcel, B-9120 Beveren (BE)
(74) Representative: Elseviers, Myriam
(86) International application number: PCT/US2011/034770
(87) International publication number: WO 2011/139959

(56) References cited:
- WO-A1-2008/100851
- WO-A1-2009/036954
- US-A1- 2002 011 181
- US-A1- 2002 160 083
- US-A1- 2007 048 418
- HARTEL R W ET AL: "Polyols and bulking agents in sugarfree chocolate", MANUFACTURING CONFECTIONER, MANUFACTURING CONFECTIONER PUBLISHING COMPANY, US, vol. 81, no. 6, 1 January 2001 (2001-01-01), pages 81-92, XP009105856, ISSN: 0025-2573

## Description

### FIELD

The present invention relates generally to reduced calorie and/or sugar-free coatings for food compositions. The coated food composition comprises a food product and a coating, wherein the coating comprises a mixture of erythritol and at least one bulking agent, wherein the erythritol comprises between 20% to 90% by weight of the coating, and wherein the bulking agent comprises between 10% to 80% by weight of the coating. Other aspects relate to a method for preparing a coated food composition where the coating is reduced calorie and/or sugar-free. The claimed subject-matter is defined in the appended claims.

### BACKGROUND

Food products are often covered with a coating to improve appearance (such as providing a glossy look), add sweetness, flavor, and/or coloring to the food products. For example, cereal products often are covered with a sweetener composition comprising water, sucrose (commonly known as table sugar), honey, dextrins, or a glucose-based glaze to provide sweetness and flavor to the cereal, as well as other ingredients. The starting amount of water added in preparing the coating can be as much as one-fourth to one-third percent of the coating mixture by weight.

A variety of methods are used for making a food composition and coating a food product, such as by making a sugar solution in water, spraying the solution onto the food product, using a rotating drum system to coat the food product, and drying the product by evaporating off the water. The drying step can occur by any number of means, including by using the same rotating drum system to drive the water off, by using a drying air stream, or by a separate dryer to evaporate the water from the food composition. The drying or evaporation step is also used to start the crystallization of the coating. A separate cooling belt can be used to bring the food composition to room temperature.

The current processes suffer from a number of disadvantages. First, commonly used sugars for the coatings such as sucrose are very hygroscopic and tend to absorb water from the air, reducing the shelf-life of the food composition and resulting in a soft, mushy, or soggy product. In addition, when a sugar such as a sucrose solution or sweetening syrup is used to make the coating, the water portion of the coating must be driven off after coating the product so it does not produce a composition with high water content that will make the composition soft, mushy or soggy. This can also result in a product with a reduced shelf life. Moreover, using a water-based coating can potentially add water to the food product. This is particularly troublesome for products that need to have a "crunchy" texture, such as with cereals or bakery products.

When using a sweetener such as glucose, honey, or dextrins, they are often in syrup form, and they have a tendency to clog the traditional mixing machines such as a rotating drum due to their high viscosity and stickiness. It also can result in a final coated product that is "sticky" rather than one having a crunchy texture. Finally, traditional sugar-based coatings such as sucrose, honey, and glucose-based glazes can add sugar and calories to the food product at a time when consumers are looking for products that limit the intake of sugar, calories, or both.

The current processes also require numerous steps and additional time due to the introduction of a coating that contains significant amounts of water that must eventually be removed from a coating that is also hygroscopic.

Other processes used also require additional steps that can add costs and time. U.S. Pat. No. 6,875,460 B2 (the '460 reference) discloses a co-crystallized product and process for making a product comprising polyols such as xylitol, mannitol, sorbitol, and erythritol along with hydrogenated maltodextrin. The disadvantage of the process is the need to hydrogenate the maltodextrin, thereby reducing the dextrose equivalents (DE), which indicates the proportion of aldehyde, hemiacetal or ketone terminal groups in the compound, to essentially zero. U.S. Pat. 6,613,898, incorporated by reference into the '460 reference, discloses one such method of converting a polysaccharide such as maltodextrin into a polyol such as hydrogenated maltodextrin. As a result, the '460 reference process requires even more steps than other processes, including at least hydrogenation of maltodextrin (and in an alternative, more practical process for large-scale operations, it discloses the hydrogenation of the polyol with maltodextrin, as well as applying shearing during cooling). Moreover, the removal of the aldehyde, hemiacetal and ketone groups results in a completely different product chemically than maldodextrin.

US 2002/0011181 relates to co-crystallized polyols and hydrogenated maltodextrins. The co-crystallisation of polyols and hydrogenated maltodextrin porvides a sweeteer product that is sucrose-free, yet has a reduced sensory cooling effect compared to the original polyols.

WO 2009/036954 relates to erythritol-based hard coatings. It describes coated product comprising a core and a hard coating surrounding the core, wherein the hard coating is composed of at least ine coating layer, which comprises erythritol and one or more crystallization modifiers.

WO 2008/100851 related to coated confectionery porducts and methods of making the coated confectionery products. It provides a confectionery product comprising a confectionery center and a coating comprising erythritol and an anti-crystallizing agnent surrounding the confectionery center.

R. Hartel in The Manufacturing Confectioner describes polyols and bulking agents in sugarfree chocolate.

US 2002/0160083 relates to a process for coating sugar-free boiled sweets, allowing the creation if a hard and translucent coating, comprising the application of a coating syrup, chatacterzied in that the said syrup comprises at least one polyol, at least one high molecular weight polysaccharide and at least one fat.

A need therefore exists for a food composition with a coating that is either reduced in calories or sugar-free. The present invention discloses a food composition having a good shelf life that is relatively low in hygroscopicity. It also has a sweetness and taste comparable to traditional sugars used as coating, such as sucrose or syrups. The coating is crunchy and provides a partially crystalline-glossy appearance and texture. It also has a high digestive tolerance for a food product. The process for making the coated food composition improves upon processes already known by eliminating steps, thereby saving energy, time and money. The food composition can be used on or in a variety of food products such as cereal products (e.g., corn flakes), baking products such as cakes, cookies, biscuits and meringue, icings, glazes, candied fruits, nougat crumbs, expanded snacks, dates, dried fruits, and nuts.

These and other aspects of the present invention are elucidated further in the detailed description.

### SUMMARY

In view of the above, it is an object of the present invention to provide reduced calorie or sugar-free coatings for food compositions with good shelf life that has a crunchy, crystalline texture. One embodiment is directed toward a coated food composition that comprises a food product and a coating. The coating comprises a mixture of erythritol and a bulking agent. The erythritol portion of the coating comprises between 20% to 90% by weight of the coating, and the bulking agent comprises between 10% to 80% by weight of the coating. The bulking agent is a maltodextrin. The coating at least partially covers the food composition.

The food product of the food composition is a cereal product, bakery product or snack product. The food composition can further comprise one or more additives selected from the group consisting of coloring agents, flavoring agents, cocoa powder, natural or synthetic high intensity sweeteners, lignin, pectins, arabinoxylans, arabinogalactans, beta-glucans, galactomannans, carrageenans, alginates, xanthan, cellulose, starch, modified starches, modified cellulose or combinations thereof The one or more additives comprise between 0.001% and 10% by weight of the coating. In one embodiment, the erythritol comprises between 50% to 80% by weight of the coating, and the bulking agent comprises between 20% to 50% by weight of the coating. The bulking agent is maltodextrin. In another embodiment, the bulking agent comprises maltodextrin and at least one bulk sweetener.

In one embodiment, a method for producing a coated food composition comprises melting a mixture of erythritol and at least one bulking agent, spraying the mixed coating onto a food product to at least partially cover the food product with the mixed coating, and solidifying the coated food product. In an alternative embodiment, the erythritol portion of the coating comprises between 50% to 80% by weight of the coating, and the bulking agent comprises between 20% to 50% by weight of the coating.

The bulking agent is a maltodextrin. The bulk sweetener comprises natural or artificial sweeteners comprising sugar, glucose syrups, maltose syrups, high fructose corn syrups, malto-oligosaccharides, mono-, di- and poly-saccharides, honey, sucromalt, isomaltulose, psicose, and isomalto-oligosaccharides. In another embodiment, the method further comprises adding to the mixed coating one or more additives selected from the group consisting of coloring agents, flavoring agents, cocoa powder, natural or synthetic high intensity sweeteners, lignin, pectins, arabinoxylans, arabinogalactans, beta-glucans, galactomannans, carrageenans, alginates, xanthan, cellulose, starch, modified starches, modified cellulose or combinations thereof.

In another embodiment, the temperature of the melting step is between 120°C to 200°C, the temperature of the spraying step is between 120°C to 200°C and a pressure of 3-15 bar. In another embodiment, the temperature is between 130°C to 150°C and the pressure is between 5-7 bar. In another embodiment, the method further comprises mixing erythritol and at least one bulking agent to form a mixed coating.

In one embodiment, a method for producing a coated food composition comprises dissolving a solution of erythritol and at least one bulking agent in a solution to form a mixed coating, adding the mixed coating to a food product to at least partially cover the food product with the mixed coating, and drying the coated food product.

It has unexpectedly been found that a blend of erythritol and a bulking agent comprising maltodextrin will lead to a food composition made by a more simplified process that has a crunchy, crystalline or glossy texture and low hydroscopic properties. The resulting coated food composition exhibits several desirable properties, including reduced stickiness, good flowability, reduced calorie content and/or a sugar-free coating that is crunchy, and has a longer shelf-life. In one embodiment, by not adding water to the mixed coating, there are a reduced number of steps in the process as well.

### BRIEF DESCRIPTION OF THE DRAWINGS

The present invention will become more fully understood from the detailed description given below and the accompanying drawings. These drawings are given by way of illustration only, and thus are not intended to be limiting of the present invention.

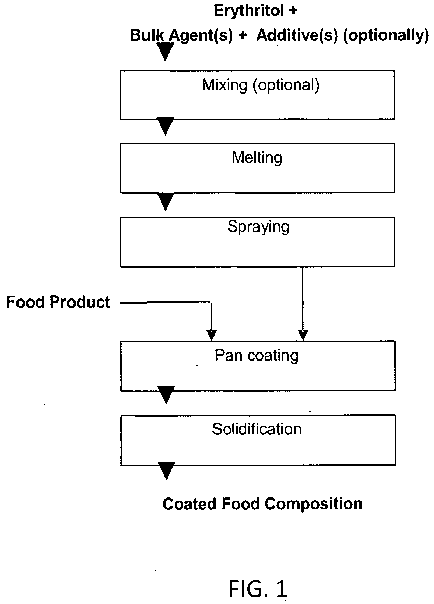

Figure 1 is a block diagram that illustrates an example of a process for preparing a food composition of erythritol and a bulking agent. In this diagram, a method of producing a coated food composition comprises the steps of optionally blending or mixing the ingredients of erythritol, at least one bulking agent, and optionally, additives if they are provided separately, melting the mixture to form a mixed coating, spraying the mixed coating to at least partially covering the food product with the mixed coating such as by pan coating, and solidification to obtain the coated food product.

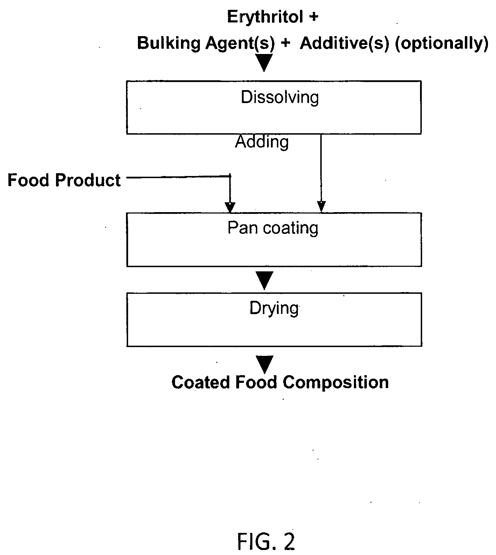

Figure 2 is a block diagram that illustrates another example of a process for preparing a composition of a sweetener and an ingredient. The ingredients of erythritol, at least one bulking agent, and optionally, additives are provided in a solvent such as hot water, at least partially covering a food product with the mixed coating, and drying to obtain coated food composition.

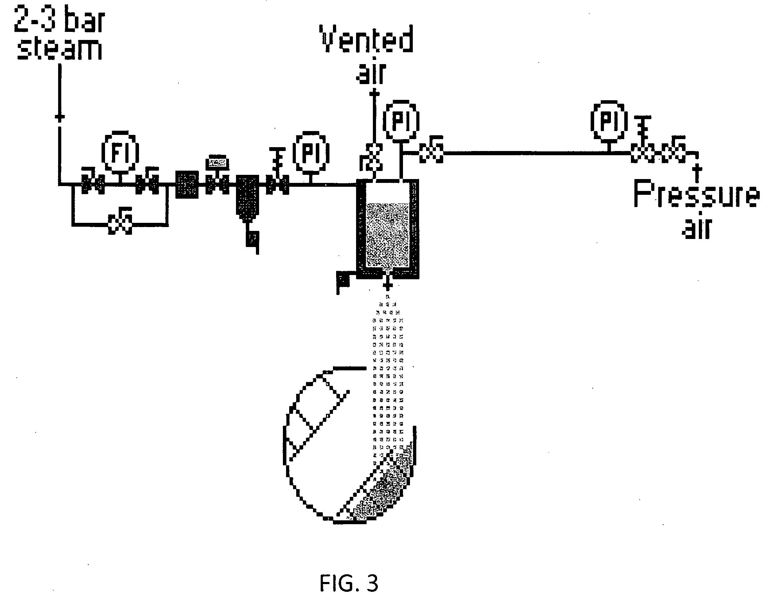

Figure 3 is a schematic that illustrates the spraying step where the mixed coating is sprayed onto a food product to at least partially cover the food product with the mixed coating. In one example, the spraying occurs in a coating pan.

### DETAILED DESCRIPTION

### SELECTED DEFINITIONS

As used herein, the following terms shall have the following meanings:

The term "erythritol" as used herein refers to a naturally-occurring sugar alcohol that is well-known as a sugar substitute and has been approved for use as a sweetener throughout the world. Erythritol is a tetrahydric polyol having the structural formula HOCH₂-CHOH-CHOH-CH₂OH (C₄H₁₀O₄).

The term "maltodextrin" as used herein refers to a polysaccharide having a structure of D-glucose units linked together with α(1→4) glycosidic bonds in chains of varying length, having the molecular formula of C₆ₙH₍₁₀ₙ₊₂₎O₍₅ₙ₊₁₎. Maltodextrins are the dried products or purified aqueous solutions of saccharides obtained from edible starch having a dextrose equivalency of less than 20. Outside the U.S., the products may be known as dextrins; only the U.S. has an official definition of maltodextrins.

The term "dextrose equivalent (or DE)" as used herein refers to the measure of the total reducing sugars calculated as D-glucose on a dry weight basis. The approved method for determining DE is the Lane-Eynon titration, which measures reduction of a copper sulfate solution. Unhydrolyzed starch has a DE value of zero, while the DE value of anhydrous D-glucose is 100.

The term "soluble fibers" as used herein refers to compounds such as non-starch polysaccharides, oligosaccharides, fructo-oligosaccharides, galacto-oligosaccharides, tagatose, inulin, polydextrose, resistant maltodextrins, indigestible gluco-oligosaccharides, dextrins, and other prebiotic carbohydrates. For clarity, indigestible oligosaccharides are composed of a variety of monosaccharides that are linked in several ways (type of bond and chain length) and typically are composed of a polydisperse set of comparable molecules differing only in chain length. They are prepared either by (1) extracting from natural sources (soybean oligosaccharides) followed by partial enzymic hydrolysis (e.g. xylo-oligosaccharides, arabinoxylo-oligosaccharides oligofructose), or (2) synthesizing by subjecting disaccharides such as lactose, maltose or sucrose to the action of transferases (e.g. transgalacto-oligosaccharides, gluco-oligosaccharides, fructo-oligosaccharides, or kojibio-oligosaccharides). Although differing in their chemical characteristics, all resist digestion. Resistant maltodextrins are short chain polymers of glucose that are also resistant to digestion.

The term "bulk sweeteners" as used herein refers to compounds such as natural or artificial sweeteners comprising sugar, glucose syrups, maltose syrups, high fructose corn syrups, malto-oligosaccharides, mono-, di- and poly-saccharides, honey, sucromalt, isomaltulose, psicose, and isomalto-oligosaccharides.

The term "bulking agent" as used herein refers to the maltodextrin that make up part of the coating or mixed coating.

The term "additives" as used herein refers to any number of compounds that can be added to the coated food composition or coating. The additives can be added at any step through the process, including during any of the steps of forming the coating or forming the coated food product. Additives can include coloring agents, flavoring agents, cocoa powder, natural or synthetic high intensity sweeteners, lignin, pectins, arabinoxylans, arabinogalactans, beta-glucans, galactomannans, carrageenans, alginates, xanthan, cellulose, starch, modified starches, modified cellulose or combinations thereof

The term "coating" as used herein refers to the mixture of erythritol and one or more bulking agents.

The term "mixed coating" as used herein refers to erythritol and one or more bulking agents that are mixed together.

The term "food product" as used herein refers to an edible product fit for consumption, including cereal products, baking products such as cakes, biscuits, donuts, meringue, icings, glazes, and cookies, snack products such as candied fruits, nougat crumbs, expanded snacks, dates, dried fruits, nuts, and other products that may come into contact with a liquid.

The term "coated food composition" as used herein refers to the combination of the food product with the coating or mixed coating.

The term "ingredients" as used herein refers to any of the compounds that make up the coating or mixed coating, including erythritol, the bulking agents and additives.

The term "mixing" as used herein refers to the process of mixing together the ingredients.

The term "melting" as used herein refers to the process of heating the ingredients until they change state from a solid to a liquid.

The term "spraying" as used herein refers to a process of using an atomizer nozzle to convert the mixed coating into a fine spray of a liquid that is sprayed onto a food product to at least partially cover the food product with the mixed coating.

The term "dissolving" as used herein refers to the process of making a solution of erythritol and at least one bulking agent. The solution can be an aqueous solution.

The term "adding" a used herein refers to the process of providing the ingredients, including erythritol, at least one bulking agent, and optionally additives together in a solution to form a mixed coating.

### COATED FOOD COMPOSITION

The coated food composition of the present disclosure is the combination of a number of ingredients that make up the coating, including erythritol and at least one bulking agent. The coated food composition can be either reduced in calories compared to a traditional sugar coating, sugar free, or both. It also has the benefit of providing a sweetness, taste and crunchy coating comparable to traditional sugar coatings. Moreover, it has the benefit of having a partially crystalline-glossy appearance and texture. And it can increase shelf-life due to using at least one compound erythritol that has very low hygroscopicity.

Erythritol is a naturally-occurring sugar alcohol that can be used as a sugar substitute. Even though it has a sweetness of about 0.65 (with sucrose having a sweetness of 1.0) it has a caloric value of only 0.2 calories per gram compared to 2.4 kcal/g for sucrose. It therefore can be used to make a product that is either reduced calorie as compared to one that uses a caloric sweetener such as sugar, or one that is sugar-free. It is non-hydroscopic, with very low viscosity, and commercially available as Zerose™ brand erythritol from Cargill, Incorporated as a crystalline powder. Unlike other sugar alcohols often used as sweeteners, erythritol does not affect blood sugar, does not cause tooth decay, and is readily absorbed by the body, thereby reducing gastric side effects.

One of the ingredients comprising the bulking agent is maltodextrin. It generally has a DE less than 20 and is moderately sweet to neutral in taste and easily digestible. It is commercially available as spray-dried powder from Cargill, Incorporated as C☆Dry MD™ maltodextrin. Maltodextrin can be used to as part of a reduced calorie or sugar-free coating or coated food composition.

If a calorie-free coated food product is desired, one embodiment of the coated food product can include the coating mixture comprising either erythritol mixed with maltodextrin, or erythritol mixed with a combination of maltodextrin and one or more soluble fibers.

In combination with erythritol, the caloric value of the coating and coated food composition will be reduced in comparison to traditional coatings made of sugars or syrups, as the erythritol has a caloric value of only about five percent of sugar. A reduced calorie coated food composition can comprise erythritol and at least one bulk sweetener, along with maltodextrin.

The erythritol comprises between 20% to 90% by weight of the coating, and the at least one bulking agent comprises between 10% to 80% by weight of the coating. In another embodiment, the erythritol comprises between 50% to 80% by weight of the coating and the bulking agent comprises between 20% to 50% by weight of the coating. In yet another embodiment, the erythritol comprises between 50% to 70% by weight of the coating and the bulking agent comprises between 30% to 50% by weight of the coating.

In another embodiment, additives can be added to the coating or the mixed coating at any stage of the process. Additives can add a desired color, flavor, or additional sweetness to the coated food product. One or more additives can be added to the coating and will comprise between 0.001% to 10% of the coating.

### METHOD OF PRODUCING A COATED FOOD COMPOSITION

For ease of understanding, methods of producing to coated food composition are described below with reference to Figures 1, 2 and 3. Those skilled in the art will recognize, however, that aspects of such methods can be carried out in other systems.

In one embodiment, the coated food composition is produced by melting a mixture of erythritol and at least one bulking agent to form a mixed coating, spraying the mixed coating onto a food product to at least partially cover the food product with the mixed coating, and solidifying the resulting coated food product. The melting step can be undertaken by any means known in the art of adding heat to the mixture through heat, steam, microwave or other means, in an apparatus such as extruder, oven, double jacketed vessel, or pan. In one embodiment, the mixture is heated to a temperature of between 120°C and 200°C. This process can produce a product that is either reduced in calories compared to a traditional sugar coating, sugar free, or both. It also allows the introduction of additives to the mixed coating or coated food product at any step in the process.

The spraying step converts the mixed coating into a fine spray of a liquid by using an atomizer nozzle based on the Venturi effect. When a gas is blown through a constriction it speeds up, which reduces the pressure at the narrowest point. The reduced pressure sucks up the mixed coating through a narrow tube into the flow, where it boils in the low pressure, and forms thousands of small droplets. These small droplets of the mixed coating can at least partially covering the food product by spraying the coating onto the food product. Another method of at least partially cover the food product is by pouring the coating liquid onto the food product that is continuously mixed with the coating. The temperature of the spraying step can be at 120°C to 200°C and at a pressure of 3-15 bar. In another embodiment, the temperature is between 130°C to 150°C and the pressure is between 5-7 bar.

The solidifying step of the process for coating the food product can be done by any number of processes known in the art, including allowing it to air dry to room temperature, by forcing cooling using cooled air, or by using a cooled surface (e.g., such as a cooling belt).

In an alternative embodiment, the starting material can be a solution of erythritol and at least one bulking agent that are dissolved in the solution. The subsequent steps include adding the mixed coating to a food product to at least partially covering the food product with the mixed coating, and drying the coated food product. The solution can be an aqueous solution of the ingredients. The solution can be pre-made or one that is prepared by mixing the ingredients in the solution. Subsequently, a drying step is necessary to remove the water from the coated food product, by means known in the art such as applying heat at a temperature between 40°C and 250°C. Another common practice is to coat on a hot surface, as in the case of baked goods, and subsequently to cool the coated product to induce crystallization. Cooling can be done in a cooling tunnel.

This process can result in a product that is reduced in calories compared to a traditional sugar or syrup coating. Moreover, because one of the ingredients is erythritol, it will have crystalline structure and appearance with a crunchy texture. In addition, its low hygroscopicity will lead to a longer shelf-life as it will not absorb moisture as will traditional sugar or syrup-based coatings.

### EXAMPLES

Aspects of the coated food composition in accordance with various methods of making the composition are illustrated in the following examples. The benefits of the coated food composition and the method of making it are evident from examples performed on the composition. In certain examples, the process is simplified by using a mixture of erythritol with maltodextrin without the addition of water. This results in a reduction of steps necessary in the process as there is no need to have a drying step. It also leads to improved crystalline properties of the resulting coating and coated food product.

### Example 1 - Comparative

In this Example, 105g of erythritol (C*Eridex 16952, Cargill, Incorporated) alone is the coating for the food product comprising 250g of corn flakes. The spray-dried erythritol is heated in a microwave until the powder is molten, then added to the food product in a coating pan all at once. The rotation speed of the coating pan is at 25 rotations per minute (rpm). The mixture of the molten erythritol coating and the food product is then cooled. There is no need to add drying air as no water is added to the mixture to start the crystallization of the erythritol, which would require an evaporating or drying step to remove the water added. The molten erythritol crystallizes rapidly during the cooling step, but it also crystallizes on the walls of the coating pan. The coating partially covers the food product.

### Example 2

In Example 2, the same parameters are used as in the Example 1, except the starting material for the coating is C* PharmEridex DC 16967™ blend, which is a spray-dried mixture of Eridex™ erythritol and C* MD 01955™ maltodextrin, all from Cargill, Incorporated. The erythritol is 90% by weight of the mixture and the maltodextrin is 10% by weight of the mixture (90/10).

In this example, one of the advantages of using the mixture of erythritol and maltodextrin as the coating in comparison to a pure erythritol coating that is the mixture has a slower crystallisation speed, which results in a lower amount of coating on the wall of the coating pan. The mixed coating partially covers the food product.

The following pilot trials are done on a number of coating mixtures. The first two examples utilize a mixture of erythritol and carrageenan, in comparison to the subsequent three tests comprising various mixtures of erythritol and maltodextrin. The first examples have the disadvantage of being too viscous. The subsequent tests using a mixture of erythritol and maltodextrin as the coating exhibit better application to the food product.

### Example 3 - Comparative

In this example, 5 kg erythritol (Eridex™ 16954 erythritol, Cargill) and 100 g carrageenan (Satiagel™ UTH 18 carrageenan) are mixed in a Lodige ploughshare mixer (type M120 GREI) for 10 minutes at a mixer speed of 160 rpm.

Next, 1 kg of this mixture is then transferred into a 4 liter vessel. This vessel has a jacket and in the bottom outlet a spraying nozzle (full cone nozzle TG0.3 from Spraying Systems) is screwed (see Fig.3). Then the mixture is heated to 130°C by supplying the double jacket with steam at 2-3 bar. After this, the vessel is closed and pressurized with compressed air at 5.5 bar. The molten mixture is pushed through the spraying nozzle and collected in a rotating coating pan containing 2 kg of corn flakes to form a coated food product.

The resulting mixture of erythritol and carrageenan did not perform well as it did not come out of the nozzle as a misty spray, but rather only came out as a spout.

### Example 4 - Comparative

In the next example, the same co-melt as above is used, except a solid stream nozzle (type HI/8U-SS-00015 from Spraying Systems) is used. In this example, there was no misty spray and not even a spout, but rather only drops came out of the line nozzle. By applying extra heating, a spout finally came out. These two examples of erythritol and carrageenan did not provide acceptable results for applying the coating to the food product, as a spray is desired.

### Example 5

In this example, the process and steps are the same as example 3 above, except the solution comprises a mixture of erythritol and maltodextrin. The erythritol is 80% by weight of the mixture and the maltodextrin is 20% by weight of the mixture (80/20). The other parameters are the same as above.

The results of this method using the mixture of erythritol and maltodextrin at a ratio of 80/20% w/w as the coating are better than with the erythritol and carrageenan mixture. The method allows good spraying of the mixture.

### Example 6

In this example, the process and steps are the same as example 3 above, except the solution comprises a mixture of erythritol and maltodextrin. The erythritol is 70% by weight of the mixture and the maltodextrin is 30% by weight of the mixture (70/30). The other parameters are the same as above.

The results of this method using this mixture of erythritol and maltodextrin at a ratio of 70/30% w/w as the coating are better than with the erythritol and carrageenan mixture. The method allows good spraying of the mixture.

### Example 7

In this example, the process and steps are the same as example 3 above, except the solution comprises a mixture of erythritol and maltodextrin. The erythritol is 50% by weight of the mixture and the maltodextrin is 50% by weight of the mixture (50/50). The other parameters are the same as above.

The results of this method using the mixture of erythritol and maltodextrin 50/50% w/w as the coating are better than with the erythritol and carrageenan mixture. The method allows good spraying of the mixture with a good coating that is crystalline and not sticky.

One of the advantages of coating a food product such as a cereal product with a mixture of erythritol and a bulking agent such as maltodextrin is that the coating can start from a melt instead of starting from a solution such as a water-based solution. This avoids the wetting of the food product, which can absorb some of the water. This wetting can lead to the collapsing of expanded food products during coating. It can also lead to the loss of crunchiness if the food product is insufficiently dried after coating. Using the method disclosed in the present invention, a drying step is not needed. Crystallisation of the coating does not take place by evaporation but rather by cooling. This allows the coating of food products that are very sensitive to moisture without the issues that can arise when water is used in the coating process. However, if needed, the described solutions can also be applied using the traditional coating technology by applying a solution of erythritol, a bulking agent, and other additives, in water. Because erythtritol is not hygroscopic (whereas sugars are very hygroscopic), the resulting coated food product will have more crunch and texture, and will exhibit a longer shelf life.

## Claims

1. A coated food composition comprising: a food product and a coating, wherein the coating consists of a mixture of erythritol and at least one bulking agent, wherein the erythritol comprises between 20% to 90% by weight of the coating, and wherein the bulking agent comprises between 10% to 80% by weight of the coating, wherein the bulking agent is a maltodextrin, and wherein the coating at least partially covers the food composition, and wherein the food product comprises a cereal product, a bakery product or a snack product and wherein the snack product is candied fruits, nougat crumbs, expanded snacks, dates, dried fruits or nuts.

2. The composition of claim 1, further comprising one or more additives selected from the group consisting of coloring agents, flavoring agents, cocoa powder, natural or synthetic high intensity sweeteners, lignin, pectin, arabinoxylans, arabinogalactans, beta-glucans, galactomannans, carrageenans, alginates, xanthan, cellulose, starch, modified starches, modified cellulose or combinations thereof.

3. The composition of claim 2, wherein the one or more additives comprise between 0.001% and 10% by weight of the coating.

4. A method for producing a coated food composition according to claim 1, comprising:
melting a mixture of erythritol and at least one bulking agent to form a mixed coating;
spraying the mixed coating onto a food product to at least partially cover the food product with the mixed coating, and
solidifying the coated food product and wherein the bulking agent is a maltodextrin.

5. The method of claim 4, wherein the erythritol comprises between 20% to 90% by weight of the coating, and wherein the bulking agent comprises between 10% to 80% by weight of the coating.

6. The method of claim 4, further comprising adding to the mixed coating one or more additives selected from the group consisting of coloring agents, flavoring agents, cocoa powder, natural or synthetic high intensity sweeteners, lignin, pectins, arabinoxylans, arabinogalactans, beta-glucans, galactomannans, carrageenans, alginates, xanthan, cellulose, starch, modified starches, modified cellulose or combinations thereof.

7. The method of claim 4, wherein the temperature of the melting step is between 120°C to 200°C, and the temperature of the spraying step is between 120°C to 200°C and a pressure of 3-15 bar.

8. The method of claim 4, further comprising the step of mixing erythritol and at least one bulking agent to form a mixed coating.

9. A method for producing a coated food composition according to claim 1, comprising:
dissolving erythritol and at least one bulking agent in a solution to form a mixed coating;
adding the mixed coating to a food product to at least partially cover the food product with the mixed coating; and
drying the coated food product and wherein the erythritol comprises between 20% to 90% by weight of the coating, and wherein the bulking agent comprises between 10% to 80% by weight of the coating, wherein the bulking agent is a maltodextrin, wherein the temperature of the melting step is between 100°C to 200°C, the temperature of the spraying step is between 100°C to 200°C and at a pressure of 6 bar.

## Patentansprüche

1. Beschichtete Nahrungsmittelzusammensetzung umfassend: ein Nahrungsmittelprodukt und eine Beschichtung, wobei die Beschichtung aus einer Mischung von Erythrit und mindestens einem Füllstoff besteht, wobei das Erythrit 20 bis 90 Gew.-% der Beschichtung umfasst und wobei der Füllstoff 10 bis 80 Gew.-% der Beschichtung umfasst, wobei der Füllstoff ein Maltodextrin ist und wobei die Beschichtung die Nahrungsmittelzusammensetzung mindestens teilweise bedeckt und wobei das Nahrungsmittelprodukt ein Getreideerzeugnis, ein Bäckereiprodukt oder ein Snackprodukt umfasst und wobei das Snackprodukt kandierte Früchte, Nougatkrümel, expandierte Snacks, Datteln, Trockenobst oder Nüsse umfasst.

2. Zusammensetzung nach Anspruch 1, ferner ein oder mehrere Zusatzmittel umfassend ausgewählt aus der Gruppe bestehend aus Farbmitteln, Aromastoffen, Kakaopulver, natürlichen oder synthetischen Hochintensitätsüßstoffen, Lignin, Pectin, Arabinoxylanen, Arabinogalactanen, Beta-Glucanen, Galactomammanen, Carraghenen, Alginaten, Xanthan, Cellulose, Stärke, modifizierten Stärken, modifizierter Cellulose oder Kombinationen davon.

3. Zusammensetzung nach Anspruch 2, wobei des eine oder die mehreren Zusatzmittel 0,001 bis 10 Gew.-% der Beschichtung umfassen.

4. Verfahren für die Herstellung einer beschichteten Nahrungsmittelzusammensetzung nach Anspruch 1, umfassend: das Schmelzen einer Mischung von Erythrit und mindestens einem Füllstoff, um eine gemischte Beschichtung zu bilden; das Sprühen der gemischten Beschichtung auf ein Nahrungsmittelprodukt, um das Nahrungsmittelprodukt zumindest teilweise mit der gemischten Beschichtung zu bedecken, und das Verfestigen des beschichteten Nahrungsmittelprodukts und wobei der Füllstoff ein Maltodextrin ist.

5. Verfahren nach Anspruch 4, wobei das Erythrit 20 bis 90 Gew.-% der Beschichtung umfasst und wobei der Füllstoff 10 bis 80 Gew.-% der Beschichtung umfasst.

6. Verfahren nach Anspruch 4, ferner das Zusetzen zu der gemischten Beschichtung eines oder mehrerer Zusatzmittel umfassend ausgewählt aus der Gruppe bestehend aus Farbmitteln, Aromastoffen, Kakaopulver, natürlichen oder synthetischen Hochintensitätsüßstoffen, Lignin, Pectin, Arabinoxylanen, Arabinogalactanen, Beta-Glucanen, Galactomammanen, Carraghenen, Alginaten, Xanthan, Cellulose, Stärke, modifizierten Stärken, modifizierter Cellulose oder Kombinationen davon.

7. Verfahren nach Anspruch 4, wobei die Temperatur des Schmelzschritts zwischen 120 °C und 200 °C liegt und die Temperatur des Sprühschritts zwischen 120 °C und 200 °C liegt und der Druck 3-15 bar beträgt.

8. Verfahren nach Anspruch 4, ferner den Schritt des Mischens von Erythrit und mindestens einem Füllstoff umfassend, um eine gemischte Beschichtung zu bilden.

9. Verfahren für die Herstellung einer beschichteten Nahrungsmittelzusammensetzung nach Anspruch 1, umfassend: das Lösen von Erythrit und mindestens einem Füllstoff in einer Lösung, um eine gemischte Beschichtung zu bilden; das Zugeben der gemischten Beschichtung zu einem Nahrungsmittelprodukt, um das Nahrungsmittelprodukt zumindest teilweise mit der gemischten Beschichtung zu bedecken; und
das Trocknen des beschichteten Nahrungsmittelprodukts und wobei das Erythrit 20 bis 90 Gew.-% der Beschichtung umfasst und wobei der Füllstoff 10 bis 80 Gew.-% der Beschichtung umfasst, wobei der Füllstoff ein Maltodextrin ist, wobei die Temperatur des Schmelzschritts 100 °C bis 200 °C beträgt, die Temperatur des Sprühschritts 100 °C bis 200 °C beträgt und bei einem Druck von 6 bar.

## Revendications

1. Composition alimentaire enrobée comprenant un produit alimentaire et un enrobage, dans laquelle l'enrobage est constituée d'un mélange d'érythritol et d'au moins un agent gonflant, dans lequel l'érythritol constitue entre 20 % à 90 % en poids de l'enrobage et dans laquelle l'agent gonflant constitue entre 10 % et 80 % en poids de l'enrobage, dans laquelle l'agent gonflant est une maltodextrine, dans laquelle l'enrobage enrobe au moins en partie la composition alimentaire, dans laquelle le produit alimentaire comprend un produit à base de céréale, un produit de boulangerie ou un produit d'en-cas et dans laquelle le produit d'en-cas est formé de fruits confits, de fragments de nougat, d'en-cas gonflés, de dattes, de fruits séchés et de noix.

2. Composition selon la revendication 1, comprenant en outre un ou plusieurs additifs choisis dans le groupe constitué d'agents colorants, d'agents aromatiques, de poudre de cacao, d'édulcorants de forte intensité naturels ou synthétiques, de lignine, de pectine, d'arabinoxylanes, d'arabino-galactanes, de bêta-glucanes, de galactomannanes, de carrageenanes, d'alginates, de xanthane, de cellulose, d'amidon, d'amidons modifiés, de cellulose modifiée ou de leurs combinaisons.

3. Composition selon la revendication 2, dans laquelle les un ou plus d'additifs constituent entre 0,001 % et 10 % en poids de l'enrobage.

4. Procédé de production d'une composition alimentaire enrobée selon la revendication 1, comprenant les étapes consistant à :
faire fondre un mélange d'érythritol et d'au moins un agent gonflant pour former un revêtement mixte ;
pulvériser l'enrobage mixte sur un produit alimentaire pour recouvrir au moins en partie le produit alimentaire par l'enrobage mixte et
solidifier le produit alimentaire enrobé et dans lequel l'agent gonflant est une maltodextrine.

5. Procédé selon la revendication 4, dans lequel l'érythritol constitue entre 20 % et 90 % en poids de l'enrobage et dans lequel l'agent gonflant constitue entre 10 % et 80 % en poids de l'enrobage.

6. Procédé selon la revendication 4, comprenant en outre l'addition à l'enrobage mixte d'un ou plusieurs additifs choisis dans le groupe constitué d'agents colorants, d'agents aromatiques, de poudre de cacao, d'édulcorants de forte intensité naturels ou synthétiques, de lignine, de pectine, d'arabinoxylanes, d'arabino-galactanes, de bêta-glucanes, de galactomannanes, de carrageenanes, d'alginates, de xanthane, de cellulose, d'amidon, d'amidons modifiés, de cellulose modifiée ou de leurs combinaisons.

7. Procédé selon la revendication 4, dans lequel la température de l'étape de fusion se situe entre 120 °C et 200 °C et la température de l'étape de pulvérisation se situe entre 120 °C et 200 °C sous une pression de 3 à 15 bars.

8. Procédé selon la revendication 4, comprenant en outre l'étape de mélange d'érythritol et d'au moins un agent gonflant pour former un enrobage mixte.

9. Procédé de production d'une composition alimentaire enrobée selon la revendication 1, comprenant les étapes consistant à :
dissoudre de l'érythritol et au moins un agent gonflant dans une solution pour former un enrobage mixte ;
ajouter l'enrobage mixte à un produit alimentaire pour recouvrir au moins en partie le produit alimentaire par l'enrobage mixte ; et
sécher le produit alimentaire enrobé, et dans lequel l'érythritol constitue entre 20 % et 90 % en poids de l'enrobage, dans lequel l'agent gonflant constitue entre 10 % et 80 % en poids de l'enrobage, dans lequel l'agent gonflant est une maltodextrine, dans lequel la température de l'étape de fusion se situe entre 100 °C et 200 °C, la température de l'étape de pulvérisation se situe entre 100 °C et 200 °C sous une pression de 6 bars.
